# EUROPEAN PATENT APPLICATION

(11) **EP 4 583 355 A1**
(43) Date of publication of application: **09.07.2025**
(21) Application number: 22960379.0
(22) Date of filing: 30.09.2022
(51) Int. Cl.: H02J 7/00, B60L 50/60

(54) **POWER SUPPLY CIRCUIT AND CONTROL METHOD THEREFOR, ELECTRONIC DEVICE, AND VEHICLE**

(71) Applicant: Shenzhen Yinwang Intelligent Technologies Co., Ltd., Shenzhen, Guangdong 518129 (CN)
(72) Inventor: CHEN, Bing, Shenzhen, Guangdong 518129 (CN); LI, Yanwu, Shenzhen, Guangdong 518129 (CN); FENG, Ningbo, Shenzhen, Guangdong 518129 (CN)
(74) Representative: Pfenning, Meinig & Partner mbB
(86) International application number: PCT/CN2022/123498
(87) International publication number: WO 2024/065766

(57) **Abstract**

Embodiments of this application provide a power supply circuit and a control method therefor, an electronic device, and a vehicle, which may be applied to fields such as intelligent driving, smart home, and industrial remote control. The power supply circuit includes a first power supply circuit and a second power supply circuit. The first power supply circuit includes a first battery and a DC/DC converter, an input end of the DC/DC converter is connected to the first battery, and an output end of the DC/DC converter is configured to supply power to a BMS of the first battery, a controller of the DC/DC converter, and one or more first loads. The second power supply circuit includes a second battery, the second battery is connected to the output end of the DC/DC converter through a switch, and the second battery is configured to supply power to the controller of the DC/DC converter and one or more second loads. Through the solutions of this application, reliability of the power supply circuit can be improved.

## Description

### TECHNICAL FIELD

Embodiments of this application relate to the electronic and electrical field, and more specifically, to a power supply circuit, an electronic device, and a vehicle.

### BACKGROUND

With the increasing improvement of intelligent driving technologies, requirements for low-voltage (12 V, 24 V, 36 V, 48 V, or the like) power supply are also increasing. For example, loads in a vehicle such as an in-vehicle infotainment device, a vehicle-mounted navigator, and an intelligent driving controller all need the low-voltage power supply.

In conventional solutions, two power supply circuits are usually used to supply power to a low-voltage load in a vehicle, and the two power supply circuits are connected through a switch. A first power supply circuit of the two power supply circuits includes a direct current/direct current (DC/DC) converter, configured to convert high-voltage power output by a first battery (for example, a high-voltage battery) into low-voltage power to supply power to one or more low-voltage loads. A second power supply circuit of the two power supply circuits includes a second battery (for example, a low-voltage battery), also configured to supply power to one or more low-voltage loads. During actual operation, once it is detected that a voltage or a current of any power supply circuit is abnormal, the switch is turned off, to avoid affecting normal working of a low-voltage load in the other power supply circuit. However, if a short-circuit fault occurs in the first power supply circuit and the switch is turned off, because there is no second battery in the first power supply circuit to provide an output current, the entire first power supply circuit is in a breakdown state, which severely affects reliability of the power supply circuit.

Therefore, how to improve the reliability of the power supply circuit is a technical problem to be urgently resolved.

### SUMMARY

Embodiments of this application provide a power supply circuit and a control method therefor, an electronic device, and a vehicle, to improve reliability of the power supply circuit.

According to a first aspect, a power supply circuit is provided, including: a first power supply circuit, including a first battery and a DC/DC converter, where an input end of the DC/DC converter is connected to the first battery, and an output end of the DC/DC converter is configured to supply power to a battery management system BMS of the first battery, a controller of the DC/DC converter, and one or more first loads; and a second power supply circuit, including a second battery, where the second battery is connected to the output end of the DC/DC converter through a switch, and the second battery is configured to supply power to the controller of the DC/DC converter and one or more second loads.

The first battery may be a high-voltage battery, and is configured to output high-voltage power. The DC/DC converter is configured to convert the high-voltage power of the first battery into low-voltage power. The second battery may be a low-voltage battery, and is configured to output a low-voltage power.

Optionally, the second power supply circuit may alternatively be connected to the BMS, to implement redundant power supply of the BMS.

Based on the power supply circuit, when the first power supply circuit cannot supply power to the BMS, the DC/DC converter, and another load due to a short-circuit fault, and the switch is turned off, because the BMS of the first battery generally includes a built-in capacitor, the built-in capacitor enables the BMS to control the first battery for a short time to output the high-voltage power. In addition, because the second power supply circuit may supply power to the controller of the DC/DC converter, the controller of the DC/DC converter may control the DC/DC converter to convert the high-voltage power into the low-voltage power, to maintain output of a current, blow a fuse at a position at which the fault occurs, and therefore restore power supply of the first power supply circuit.

The power supply circuit provided in this embodiment of this application includes the first power supply circuit and the second power supply circuit. The first power supply circuit includes the first battery and the DC/DC converter. The output end of the DC/DC converter is configured to supply power to the BMS of the first battery, the controller of the DC/DC converter, and the first load. The second power supply circuit includes the second battery, configured to supply power to the controller of the DC/DC converter and the second load. The second battery is connected to the output end of the DC/DC converter through the switch. Therefore, when a voltage or a current of one power supply circuit is abnormal, the switch may be turned off, to prevent the fault in the power supply circuit from affecting normal working of a low-voltage load in the other power supply circuit. In addition, power is supplied to the BMS of the first battery in the first power supply circuit by the first power supply circuit, and power is supplied to the controller of the DC/DC converter by the first power supply circuit and the second power supply circuit. In this way, when a short-circuit fault occurs in the first power supply circuit, the DC/DC converter can be controlled, under the action of the BMS and the controller of the DC/DC converter, to output a current, and therefore restore the power supply of the first power supply circuit. In this way, reliability of the power supply circuit can be improved.

With reference to the first aspect, in some implementations of the first aspect, the switch is configured to be on in a normal state, and if a short-circuit fault occurs in a third load among the one or more first loads, the switch is configured to be switched from on to off.

Specifically, when the switch is configured to be switched from on to off, because the BMS may control the first battery for a short time to output the high-voltage power, the controller of the DC/DC converter controls, under the action of the second power supply circuit, the DC/DC converter to convert the high-voltage power into the low-voltage power, to maintain the output of the current, blow a fuse connected to the third load, clear the short-circuit fault, and therefore restore the power supply of the first power supply circuit. In this way, the reliability of the power supply circuit can be improved.

With reference to the first aspect, in some implementations of the first aspect, the first power supply circuit is configured to: if the short-circuit fault occurs in the third load among the one or more first loads, blow a fuse connected to the third load under the action of the BMS and the controller of the DC/DC converter. In this way, the short-circuit fault is cleared and the power supply of the first power supply circuit is restored. Therefore, the reliability of the power supply circuit can be improved.

With reference to the first aspect, in some implementations of the first aspect, the switch is configured to be on in a normal state. If a fault occurs in the first power supply circuit or the second power supply circuit, the switch is configured to be switched from on to off; and if the fault is cleared, the switch is configured to be switched from off to on.

The second battery has a limited energy storage capacity and can only supply power for a short time. Therefore, after the fault is cleared, the switch needs to be configured to be switched from off to on, so that the first power supply circuit can charge the second battery, and can supply power to the load in the second power supply circuit.

The switch of the power supply circuit provided in this embodiment of this application is configured to be on in the normal state. When a fault occurs in any power supply circuit, the switch is turned off, to prevent the fault in the power supply circuit from affecting normal working of a low-voltage load in the other power supply circuit. If the fault is cleared, the switch is switched from off to on, to prevent the second battery from running out of charge and affecting working of the related load. In this way, the reliability of the power supply circuit can be improved.

With reference to the first aspect, in some implementations of the first aspect, it is determined, by detecting currents or voltages of the first power supply circuit and the second power supply circuit, whether the fault occurs in the first power supply circuit or the second power supply circuit or whether the fault is cleared.

With reference to the first aspect, in some implementations of the first aspect, both the one or more first loads and the one or more second loads include a fourth load.

In this embodiment of this application, both the one or more first loads and the one or more second loads include the fourth load. In this way, when the fault occurs in any power supply circuit, the other power supply circuit can still supply power to the fourth load, to implement redundant power supply of the fourth load. Therefore, the reliability of the power supply circuit can be improved.

Optionally, the fourth load may be a relatively important load. For example, in the field of autonomous driving, the fourth load may be an intelligent driving controller in an intelligent driving vehicle. Redundant power supply of the intelligent driving controller is implemented. As a result, when the fault occurs in one power supply circuit, the intelligent driving controller can still work, preventing vehicle intelligent driving from being out of control and providing a user with sufficient time to take over.

With reference to the first aspect, in some implementations of the first aspect, the switch is an automatic protect switch.

According to a second aspect, a control method for a power supply circuit is provided. The power supply circuit includes a first power supply circuit and a second power supply circuit. The first power supply circuit includes a first battery and a DC/DC converter, an input end of the DC/DC converter is connected to the first battery, and an output end of the DC/DC converter is configured to supply power to a BMS of the first battery, a controller of the DC/DC converter, and one or more first loads. The second power supply circuit includes a second battery, the second battery is connected to the output end of the DC/DC converter through a switch, and the second battery is configured to supply power to the controller of the DC/DC converter and one or more second loads. The control method includes: detecting fault statuses of the first power supply circuit and the second power supply circuit; and controlling, based on a detection result, the switch to be turned on or turned off.

Based on the control method provided in this embodiment of this application, the switch may be controlled, based on the fault statuses of the first power supply circuit and the second power supply circuit to be turned on or turned off. Therefore, the reliability of the power supply circuit can be improved.

With reference to the second aspect, in some implementations of the second aspect, the controlling, based on a detection result, the switch to be turned on or turned off includes: if it is detected that a short-circuit fault occurs in a third load among the one or more first loads, controlling the switch to be turned off. A fuse connected to the third load is blown under the action of the BMS and the controller of the DC/DC converter, to clear the short-circuit fault.

Based on the control method provided in this embodiment of this application, when it is detected that the short-circuit fault occurs in the third load among the one or more first loads, the switch may be controlled to be turned off, to prevent the fault in the power supply circuit from affecting normal working of a low-voltage load in the other power supply circuit.

With reference to the second aspect, in some implementations of the second aspect, the controlling, based on a detection result, the switch to be turned on or turned off includes: if a fault occurs in the first power supply circuit or the second power supply circuit, controlling the switch to be turned off; or if faults in the first power supply circuit and the second power supply circuit are cleared, controlling the switch to be turned on.

Based on the control method provided in this embodiment of this application, when a fault occurs in any power supply circuit, the switch may be controlled to be turned off, to prevent the fault in the power supply circuit from affecting normal working of a low-voltage load in the other power supply circuit. In addition, when the fault is cleared or there is no fault, the switch may be controlled to be turned on, to prevent the second battery from running out of charge and affecting working of the related load. In this way, the reliability of the power supply circuit can be improved.

According to a third aspect, a control apparatus for a power supply circuit is provided, including a module configured to perform the control method according to any one of the second aspect or the possible implementations of the second aspect.

According to a fourth aspect, a control apparatus for a power supply circuit is provided, including at least one processor. The at least one processor is configured to: be coupled to a memory, and read and execute instructions in the memory, to perform the control method according to any one of the second aspect or the possible implementations of the second aspect.

According to a fifth aspect, a computer-readable storage medium is provided. The computer-readable storage medium stores computer instructions. When the computer instructions are run on a computer, the control method according to any one of the second aspect or the possible implementations of the second aspect is implemented.

According to a sixth aspect, a computer program product is provided, including instructions. When the instructions are run on a computer, the control method according to any one of the second aspect or the possible implementations of the second aspect is performed.

According to a seventh aspect, a computing device is provided, including at least one processor and a memory. The at least one processor is coupled to the memory, and is configured to: read and execute instructions in the memory, to perform the control method according to any one of the second aspect or the possible implementations of the second aspect.

According to an eighth aspect, a chip is provided. The chip includes a processor and a data interface. The processor reads, through the data interface, instructions stored in a memory, to perform the control method according to any one of the second aspect or the possible implementations of the second aspect.

Optionally, in an implementation, the chip may further include the memory, the memory stores the instructions, and the processor is configured to execute the instructions stored in the memory. When the instructions are executed, the processor is configured to perform the control method according to any one of the second aspect or the possible implementations of the second aspect.

According to a ninth aspect, an electronic device is provided, including the power supply circuit according to any one of the first aspect or the possible implementations of the first aspect.

According to a tenth aspect, a vehicle is provided, including the power supply circuit according to any one of the first aspect or the possible implementations of the first aspect.

With reference to the tenth aspect, in some implementations of the tenth aspect, both one or more first loads and one or more second loads include an intelligent driving controller.

### BRIEF DESCRIPTION OF DRAWINGS

FIG. 1 is an example diagram of a conventional architecture of a vehicle;
FIG. 2 is an example diagram of a conventional power supply circuit;
FIG. 3 is an example diagram of a power supply circuit according to an embodiment of this application;
FIG. 4 is an example diagram of power supply of a second power supply circuit in a faulty state according to an embodiment of this application;
FIG. 5 is an example diagram of power supply of a first power supply circuit in another faulty state according to an embodiment of this application;
FIG. 6 is an example diagram of another power supply circuit according to an embodiment of this application;
FIG. 7 is an example diagram of a control method for a power supply circuit according to an embodiment of this application;
FIG. 8 is an example diagram of a control method for fault occurrence according to an embodiment of this application;
FIG. 9 is an example diagram of a control method for fault clearance according to an embodiment of this application;
FIG. 10 is an example diagram of a control apparatus for a power supply circuit according to an embodiment of this application; and
FIG. 11 is an example block diagram of a hardware structure of a control apparatus for a power supply circuit according to an embodiment of this application.

### DESCRIPTION OF EMBODIMENTS

The following describes technical solutions of embodiments in this application with reference to accompanying drawings.

The solutions of this application may be applied to a moving carrier. The moving carrier may include a means of land transport, a means of water transport, a means of air transport, an industrial device, an agricultural device, an entertainment device, or the like. For example, the moving carrier may be a vehicle. The vehicle is a vehicle in a broad sense, and may be a transportation means (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreation device, or a toy vehicle. A type of the vehicle is not specifically limited in embodiments of this application. For another example, the moving carrier may be a transportation means such as an airplane or a ship.

The solutions of this application may be further applied to fields such as intelligent driving, smart home, and industrial remote control.

For ease of understanding, the following briefly describes the background technologies in embodiments of this application by using an example in which the application is applied to the vehicle.

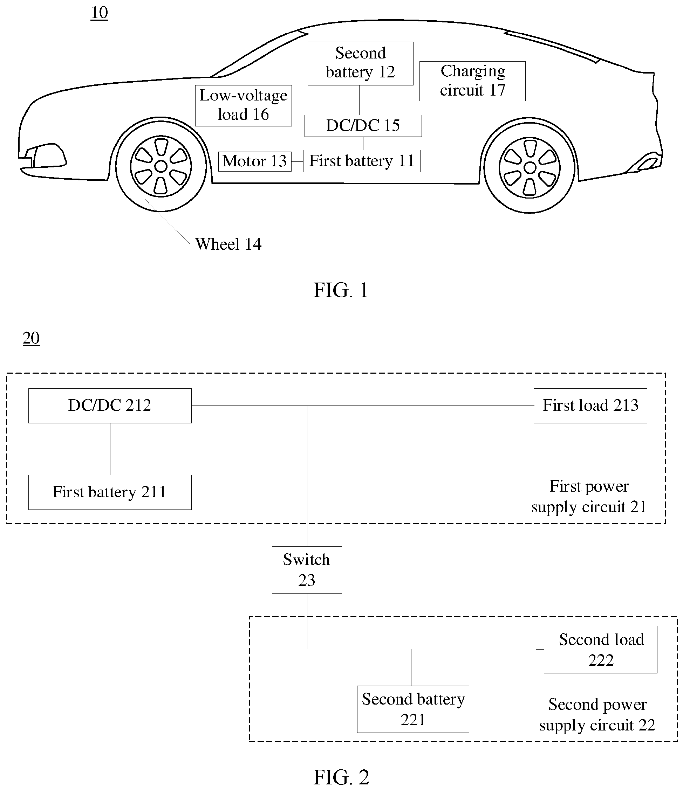

FIG. 1 is an example diagram of a conventional architecture of a vehicle. The vehicle may be a new energy vehicle such as a pure electric vehicle or a hybrid vehicle. As shown in FIG. 1, the conventional architecture 10 includes a first battery 11, a second battery 12, a motor 13, a wheel 14, a DC/DC converter 15, a low-voltage load 16, a charging circuit 17, and the like. The second battery 12 may be a low-voltage battery, and may, before the vehicle is started, supply power to the low-voltage load 16 and wake up the DC/DC converter 15. The first battery 11 may be a high-voltage battery, and is configured to drive the motor 13 to work after the vehicle is started, and then the motor 13 drives the wheel 14 to rotate, to implement movement of the vehicle. In addition, the first battery 11 is further configured to convert high-voltage power into low-voltage power by using the DC/DC converter 15 to supply power to the low-voltage load 16 and charge the second battery 12. The charging circuit 17 is configured to connect to an external charging pile or a mobile charging apparatus to charge the first battery 11, or is configured to connect to an external load of the vehicle (for example, another vehicle) to provide electric energy of the first battery 11 to the external load. The low-voltage load 16 may include a vehicle load such as a vehicle-mounted entertainment device, a vehicle-mounted navigator, and an intelligent driving controller.

In a power supply circuit provided in the conventional architecture 10, the DC/DC converter 15, the second battery 12, and the low-voltage load 16 are directly connected, and power supply of all low-voltage loads 16 in the vehicle are aggregated together. Once a fault occurs in any branch, all loads in the vehicle are affected. For example, if a short-circuit fault occurs in a specific low-voltage load 16, although a fuse may be blown under the action of the second battery 12, a voltage of the vehicle may still drop due to a hysteresis of the fuse (for example, there may be a delay of 1s for blowing), and consequently, the vehicle is out of control.

To improve reliability of the power supply circuit, a conventional solution further provides a power supply circuit. As shown in FIG. 2, the power supply circuit 20 includes two power supply circuits. A first power supply circuit 21 includes a first battery 211 and a DC/DC converter 212. An input end of the DC/DC converter 212 is connected to the first battery 211, and an output end of the DC/DC converter 212 may be configured to supply power to a first load 213 in the vehicle. A second power supply circuit 22 includes a second battery 221. The second battery 221 is connected to the output end of the DC/DC converter 212 through a switch 23, and the second battery 221 may be configured to supply power to a second load 222. In addition, power supply to the first load 213 and the second load 222 may include a same important load (for example, an important load such as an intelligent driving controller). During actual operation, once it is detected that a voltage or a current of any power supply circuit is abnormal, the switch is turned off, to avoid affecting normal working of a low-voltage load in the other power supply circuit. After a fault is cleared, the switch is turned on.

However, based on the power supply circuit 20, if a short-circuit fault occurs in the first power supply circuit 21 and the switch is turned off, because there is no second battery 221 in the first power supply circuit to provide an output current, a fuse cannot be blown. In this case, the entire first power supply circuit is in a breakdown state, and the fault cannot be cleared in the first power supply circuit 21, which severely affect the reliability of the power supply circuit.

Based on this, an embodiment of this application provides a power supply circuit. In the power supply circuit designed based on the conventional power supply circuit 20, an output end of a DC/DC converter in a first power supply circuit supplies power to a battery management system (battery management system, BMS) of a first battery and a controller of the DC/DC converter, and a second battery in a second power supply circuit supplies power to the controller of the DC/DC converter. In this way, when a short-circuit fault occurs in the first power supply circuit, the DC/DC converter can be controlled, under the action of the BMS and the controller of the DC/DC converter, to output a current, and therefore restore the power supply of the first power supply circuit. In this way, reliability of the power supply circuit can be improved.

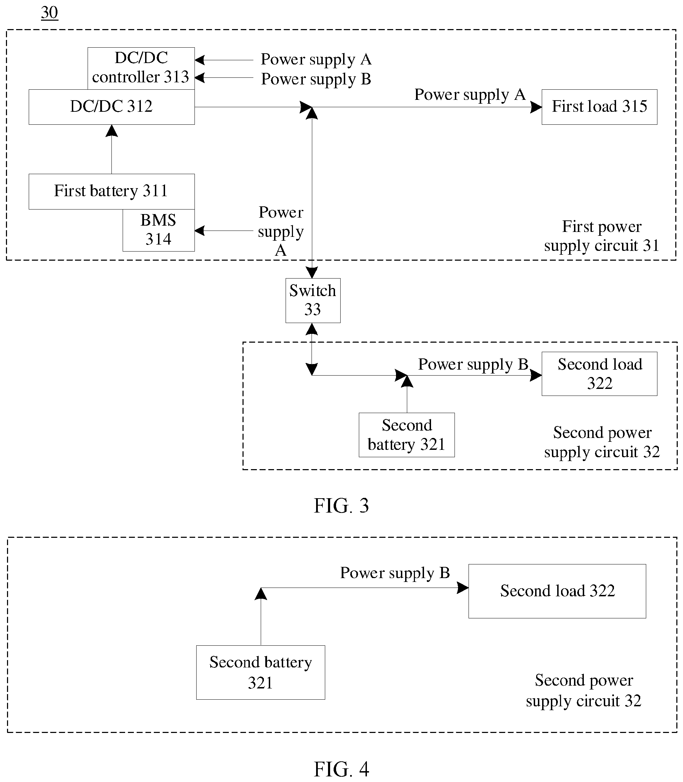

FIG. 3 is an example diagram of a power supply circuit according to an embodiment of this application. As shown in FIG. 3, a power supply circuit 30 includes a first power supply circuit 31, a second power supply circuit 32, and a switch 33. The first power supply circuit 31 includes a first battery 311 and a DC/DC converter 312. An input end of the DC/DC converter 312 is connected to the first battery 311. An output end of the DC/DC converter 312 may be configured to supply power to a BMS 314 of the first battery 311, a controller 313 of the DC/DC converter, and one or more first loads 315. The second power supply circuit 32 includes a second battery 321. The second battery 321 is connected to the output end of the DC/DC converter 312 through the switch 33. The second battery 321 may be configured to supply power to the controller 313 of the DC/DC converter and one or more second loads 322. The first battery 311 may be a high-voltage battery, and is configured to output high-voltage power. The DC/DC converter 312 is configured to convert the high-voltage power of the first battery 311 into low-voltage power. The second battery 321 may be a low-voltage battery, and is configured to output a low-voltage power.

Specifically, when the switch 33 is turned off, the switch 33 may block a voltage signal communicated bidirectionally between the output end of the DC/DC converter 311 and the second battery 321. In this case, the output end of the DC/DC converter 312 may be configured to supply power to the BMS 314 of the first battery 311, the controller 313 of the DC/DC converter, and the one or more first loads 315. The second battery 321 may be configured to supply power to the controller 313 of the DC/DC converter and the one or more second loads 322. For ease of understanding, in this embodiment of this application, power supply by the output end of the DC/DC converter 312 in the first power supply circuit 31 may be denoted as power supply A, power supply by the second battery 321 in the second power supply circuit 32 may be denoted as power supply B, and an arrow indicates a current direction. Based on this, for a current direction and a power supply status in the current case, refer to FIG. 3.

It should be understood that a current direction and a power supply status shown in FIG. 3 are merely examples. In practice, there may be another power supply status and current direction. In an example, when the switch 33 is turned on, the switch 33 may transmit a voltage signal communicated bidirectionally between the output end of the DC/DC converter 312 and the second battery 321. In this case, the output end of the DC/DC converter 312 may supply power to the BMS 314 of the first battery 311, the controller 313 of the DC/DC converter, and the one or more first loads 315, and may also supply power to the second battery 321, the controller 313 that is of the DC/DC converter and that is connected to the second battery 321, and the one or more second loads 322, both of which correspond to the power supply A. In another example, when the switch 33 is turned on and a circuit of the DC/DC converter 312 is disconnected due to a fault, the second battery 321 may supply power to the one or more first loads 315 and the one or more second loads 322, which corresponds to the power supply B.

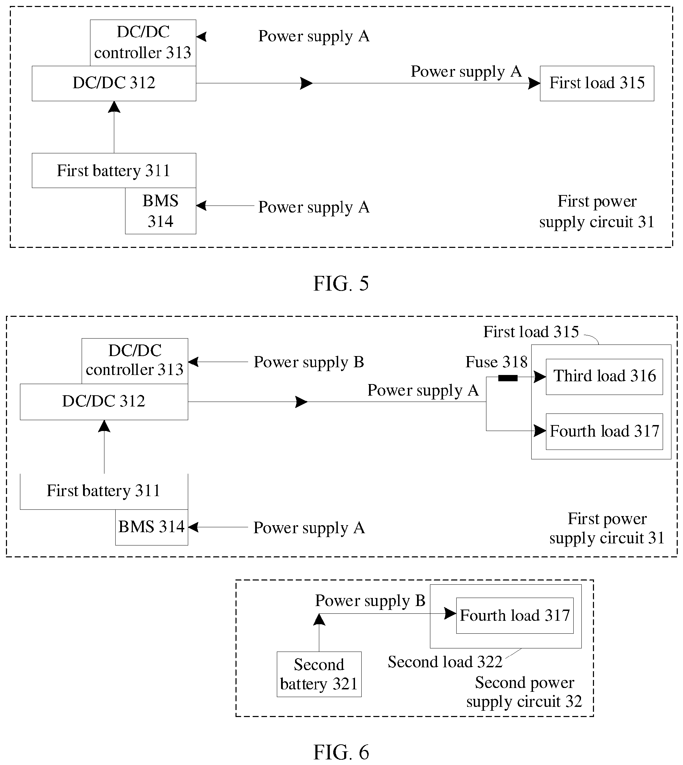

It should be understood that, the switch 33 is configured to be on in a normal state. If a fault occurs in the first power supply circuit 31 or the second power supply circuit 32, the switch 33 may be configured to be switched from on to off. In this way, when a fault occurs in any power supply circuit, the switch 33 may be turned off to prevent the fault of the power supply circuit from affecting normal working of a low-voltage load in the other power supply circuit. In an example, if the fault occurs in the first power supply circuit 31, the switch 33 is turned off, to implement electrical decoupling of the first power supply circuit 31 and the second power supply circuit 32. Because the second power supply circuit 32 includes the second battery 321, output can be maintained for power supply. As a result, power supply of the entire second power supply circuit 32 is not affected. Refer to FIG. 4, which is an example diagram of the power supply of the second power supply circuit 32. In another example, if the fault occurs in the second power supply circuit 32, the switch 33 is turned off, to implement electrical decoupling of the first power supply circuit 31 and the second power supply circuit 32. Because power is supplied to the BMS in the first power supply circuit 31 by the first power supply circuit 31, the BMS is not affected, and a capability of high-voltage output can be maintained. In addition, because the controller 313 of the DC/DC converter is connected to both the first power supply circuit 31 and the second power supply circuit 32, the controller 313 is not affected either, and a capability of converting high-voltage power into low-voltage power for output can be maintained. As a result, power supply of the entire first power supply circuit 31 is not affected. Refer to FIG. 5, which is an example diagram of the power supply of the first power supply circuit 31.

Based on the power supply circuit 30, when the first power supply circuit 31 cannot supply power to the BMS 314, the DC/DC converter 313, and the connected load due to a short-circuit fault, and the switch 33 is turned off, because the BMS 314 of the first battery 311 generally includes a built-in capacitor, the built-in capacitor enables the BMS 314 to control the first battery 311 for a short time to output the high-voltage power. In addition, because the second power supply circuit 32 may supply power to the controller 313 of the DC/DC converter, the controller 313 of the DC/DC converter may control the DC/DC converter 312 to convert the high-voltage power into the low-voltage power, to maintain output of a current, blow a fuse at a position at which the fault occurs, and therefore restore the power supply of the first power supply circuit 31. It should be understood that, when the first power supply circuit 31 cannot supply power to the BMS 314, the DC/DC converter 313, and the connected load due to the short-circuit fault, and the switch 33 is turned off, implementing current output in this manner can reduce circuit manufacturing costs compared with implementing current output by adding another battery to the first power supply circuit 31.

For example, as shown in FIG. 6, the switch 33 is configured to be on in the normal state. If a short-circuit fault occurs in a third load 316 among the one or more first loads 315, a status of the switch 33 is configured to be switched from on to off, but the power supply of the entire second power supply circuit 32 is not affected. In addition, because the BMS 314 may control the first battery 311 for a short time to output the high-voltage power, and the second power supply circuit 32 may supply power to the controller 313 of the DC/DC converter, to blow a fuse 318 connected to the third load 316 under the action of the BMS 314 and the controller 313 of the DC/DC converter, clear the short-circuit fault, and therefore restore the power supply of the first power supply circuit 31. In this way, reliability of the power supply circuit 30 can be improved.

Besides, the second battery 321 has a limited energy storage capacity and can only supply power for a short time. Therefore, after the fault is cleared, the switch 33 needs to be configured to be switched from off to on, so that the first power supply circuit 31 can charge the second battery 321, and can supply power to the load in the second power supply circuit 31, to prevent the second battery 321 from running out of charge and affecting working of the related load. In this way, the reliability of the power supply circuit 30 can be improved.

Optionally, as shown in FIG. 6, both the one or more first loads 315 and the one or more second loads 315 may include a fourth load 317, to implement redundant power supply of the fourth load 317. In this way, the reliability of the power supply circuit 30 can be improved.

The fourth load 317 may be a relatively important load in an actual application scenario. For example, in the field of autonomous driving, the fourth load 317 may be an intelligent driving controller in an intelligent driving vehicle. Redundant power supply of the intelligent driving controller is implemented. As a result, when the fault occurs in one power supply circuit, the intelligent driving controller can still work, preventing vehicle intelligent driving from being out of control and providing a user with sufficient time to take over. The fourth load 317 may alternatively be a controller of a device that plays a key role in normal driving such as a steering device or a braking device. Another first load and another second load may be devices that have little impact on normal driving such as in-vehicle infotainment devices.

There may be one controller 313 of the DC/DC converter, and the first power supply circuit 31 and the second power supply circuit 32 together supply power to the controller 313. In this case, a combination design may be performed in advance at positions of power supply of the first power supply circuit 31 and the second power supply circuit 32. Alternatively, there may be two controllers 313 of the DC/DC converter (that is, redundant configuration), and the first power supply circuit 31 and the second power supply circuit 32 respectively supply power to the two controllers 313.

There may be one fourth load 317, and the first power supply circuit 31 and the second power supply circuit 32 together supply power to the fourth load 317. In this case, the combination design may be performed in advance at the positions of the power supply of the first power supply circuit 31 and the second power supply circuit 32. Alternatively, there may be two fourth loads 317 (that is, redundant configuration), and the first power supply circuit 31 and the second power supply circuit 32 respectively supply power to the two fourth loads 317.

Optionally, the second power supply circuit 32 may alternatively be connected to the BMS 314, to implement redundant power supply of the BMS 314. Similarly, for a disposition manner of the BMS 314, refer to disposition manners of the fourth load 317 and the controller 313 of the DC/DC converter. Details are not described again. It should be noted that, compared with a case in which the second power supply circuit 32 is connected to the BMS 314, a case in which the second power supply circuit 32 is not connected to the BMS 314 may reduce circuit design complexity.

Optionally, whether a fault occurs in the first power supply circuit 31 or the second power supply circuit 32 or whether the fault is cleared may be determined by detecting currents or voltages of the first power supply circuit 31 and the second power supply circuit 32.

The connection in this application may be a direct electrical connection, may be an indirect electrical connection through another conductor or circuit element, or may be a connection through electromagnetic induction. This is not limited in this application.

The second battery 321 may be any device or component that can be configured to store electric energy and/or release the electric energy, such as a lead-acid battery, a lithium-ion battery, a nickel-hydrogen battery, a lithium polymer battery, a nickel-cadmium battery, or a supercapacitor.

The switch 33 may be an electronic switch, for example, a bidirectional (also referred to as a back-to-back) switching transistor. The switching transistor may be specifically a metal-oxide-semiconductor field-effect transistor (metal-oxide-semiconductor field-effect transistor, MOSFET), an insulated gate bipolar transistor (insulated gate bipolar transistor, IGBT), or a bipolar junction transistor (bipolar junction transistor, BJT). The switch 33 may alternatively be a mechanical switch, for example, a relay or a contactor. Optionally, there may be one or more switches 33. This is not limited in this application. Each switch 33 may include a first electrode, a second electrode, and a control electrode. The control electrode is configured to control turn-on or turn-off of the switch 33. When the switch 33 is turned on, a current may be transmitted between the first electrode and the second electrode of the switch 33. When the switch 33 is turned off, no current can be transmitted between the first electrode and the second electrode of the switch 33.

The switch 33 may be an automatic protect switch (automatic protect switch, APS), to further improve security and reliability of a battery circuit.

The low voltage in this embodiment of this application may be a low voltage such as 12 V, 24 V, 36 V, 48 V, or the like.

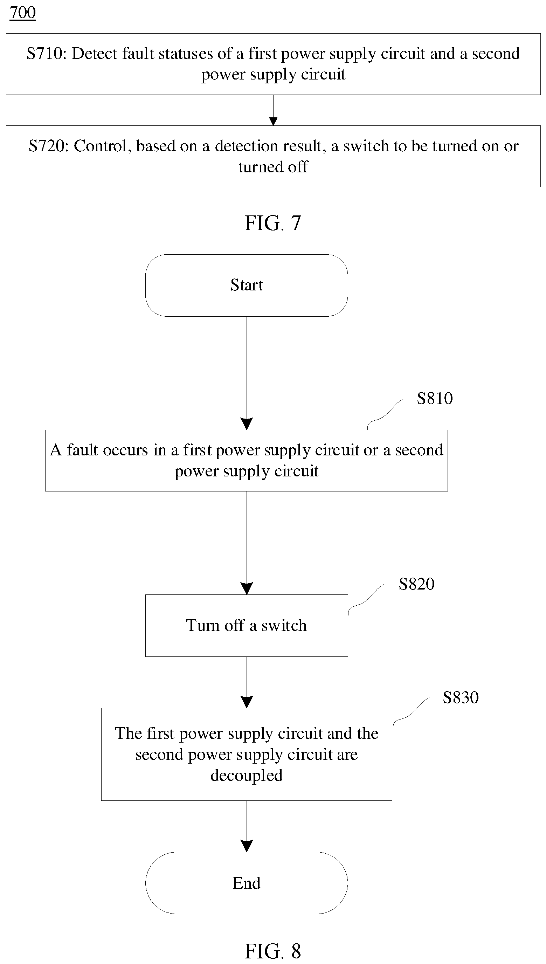

FIG. 7 is an example diagram of a control method for a power supply circuit according to an embodiment of this application. The power supply circuit may be the foregoing power supply circuit 30. The control method 700 includes steps S710 and S720. The following describes these steps.

S710: Detect fault statuses of a first power supply circuit and a second power supply circuit.

In a working process of the power supply circuit, whether faults occur in the first power supply circuit and the second power supply circuit may be detected in real time.

S720: Control, based on a detection result, a switch to be turned on or turned off.

If it is detected that a short-circuit fault occurs in a third load among one or more first loads, a switch is controlled to be turned off. A fuse connected to the third load is blown under an action of a BMS and a controller of a DC/DC converter, to clear the short-circuit fault.

As shown in FIG. 8, if the fault occurs in the first power supply circuit or the second power supply circuit (that is, step S810), the switch is controlled to be turned off (that is, step S820), so that the first power supply circuit and the second power supply circuit are decoupled (that is, step S830), and separately perform power supply.

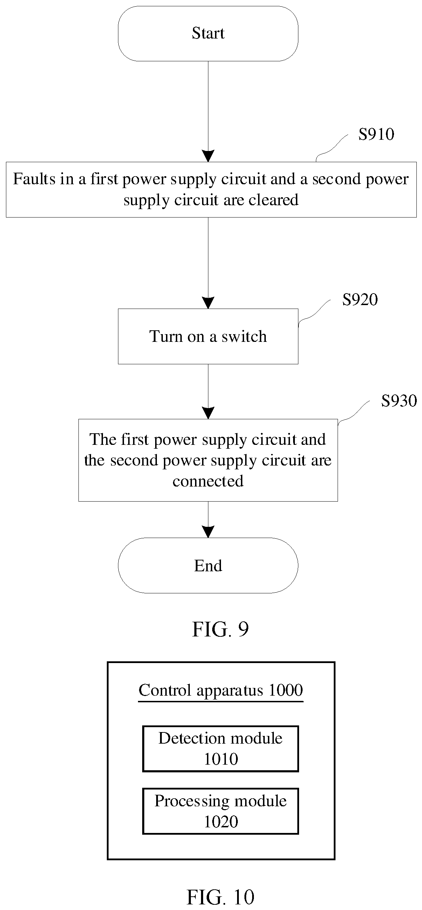

As shown in FIG. 9, if faults in the first power supply circuit and the second power supply circuit are cleared (that is, step S910), the switch is controlled to be turned on (that is, step S920), that is, the switch is switched on, so that the first power supply circuit and the second power supply circuit are connected (that is, step S930), to implement shared power supply.

Based on the control method provided in this embodiment of this application, when a fault occurs in any power supply circuit, the switch may be controlled to be turned off, to prevent the fault in the power supply circuit from affecting normal working of a low-voltage load in the other power supply circuit. In addition, when the fault is cleared or there is no fault, the switch may be controlled to be turned on, to prevent the second battery from running out of charge and affecting working of the related load. In this way, reliability of the power supply circuit can be improved.

FIG. 10 is an example diagram of a control apparatus for a power supply circuit according to an embodiment of this application. As shown in FIG. 10, the control apparatus 1000 includes a detection module 1010 and a processing module 1020. The detection module 1010 is configured to perform step S710, and the processing module 1020 is configured to perform step S720.

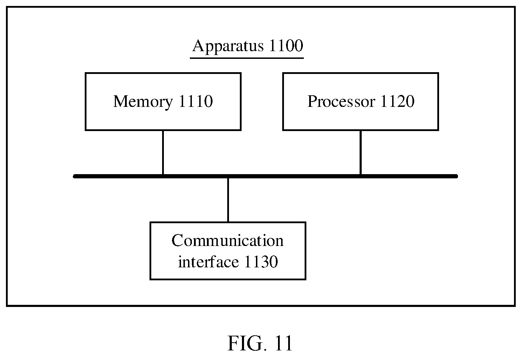

FIG. 11 is an example block diagram of a hardware structure of a control apparatus for a power supply circuit according to an embodiment of this application. Optionally, the apparatus 1100 may be specifically a computer device. The apparatus 1100 includes a memory 1110, a processor 1120, and a communication interface 1130. The memory 1110, the processor 1120, and the communication interface 1130 are communicatively connected to each other through a bus.

The memory 1110 may be a read-only memory (Read-Only Memory, ROM), a static storage device, a dynamic storage device, or a random access memory (Random Access Memory, RAM). The memory 1110 may store a program. When the program stored in the memory 1110 is executed by the processor 1120, the processor 1120 is configured to perform the steps of the control method in embodiments of this application.

The processor 1120 may be a general-purpose central processing unit (Central Processing Unit, CPU), a microprocessor, an application-specific integrated circuit (Application-Specific Integrated Circuit, ASIC), a graphics processing unit (Graphics Processing Unit, GPU), or one or more integrated circuits, and is configured to execute a related program, to implement the control method in the method embodiments of this application.

Alternatively, the processor 1120 may be an integrated circuit chip and has a signal processing capability. In an implementation process, the control method in this application may be completed by using an integrated logic circuit of hardware or instructions in a form of software in the processor 1120.

Alternatively, the foregoing processor 1120 may be a general-purpose processor, a digital signal processor (Digital Signal Processor, DSP), an ASIC, a field programmable gate array (Field Programmable Gate Array, FPGA) or another programmable logic device, a discrete gate or transistor logic device, or a discrete hardware component, and may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 1110. The processor 1120 reads information in the memory 1110, and completes, in combination with hardware of the processor 1120, functions that need to be performed by modules included in the apparatus in embodiments of this application, or performs the control method in the method embodiments of this application.

The communication interface 1130 uses a transceiver apparatus, for example, but not limited to, a transceiver, to implement communication between the apparatus 1100 and another device or a communication network.

An embodiment of this application further provides a computer-readable storage medium, including instructions. When the instructions are run on a computer, the computer is enabled to perform the foregoing control method.

An embodiment of this application further provides a computer program product, including instructions. When the instructions are run on a computer, the computer is enabled to perform the foregoing control method.

An embodiment of this application further provides a computing device, including at least one processor and a memory. The at least one processor is coupled to the memory, and is configured to read and execute instructions in the memory, to perform the foregoing control method.

An embodiment of this application further provides a chip. The chip includes a processor and a data interface. The processor reads, through the data interface, instructions stored in a memory, to perform the foregoing control method.

Optionally, in an implementation, the chip may further include the memory, the memory stores the instructions, and the processor is configured to execute the instructions stored in the memory. When the instructions are executed, the processor is configured to perform the foregoing control method.

An embodiment of this application further provides an electronic device, including any power supply circuit provided in embodiments of this application.

An embodiment of this application further provides a vehicle, including any power supply circuit provided in embodiments of this application. Optionally, one or more first loads and one or more second loads each include an intelligent driving controller.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus and method may be implemented in another manner. For example, the described apparatus embodiment is merely an example. For example, division into the units is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

Units described as separate parts may or may not be physically separate, and parts displayed as units may or may not be physical units, may be located in one place, or may be distributed on a plurality of network units. Some or all of the units may be selected according to actual requirements to achieve the objectives of the solutions of embodiments.

In addition, function units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power supply circuit, comprising:
a first power supply circuit, comprising a first battery and a direct current/direct current DC/DC converter, wherein an input end of the DC/DC converter is connected to the first battery, and an output end of the DC/DC converter is configured to supply power to a battery management system BMS of the first battery, a controller of the DC/DC converter, and one or more first loads; and
a second power supply circuit, comprising a second battery, wherein the second battery is connected to the output end of the DC/DC converter through a switch, and the second battery is configured to supply power to the controller of the DC/DC converter and one or more second loads.

2. The power supply circuit according to claim 1, wherein the switch is configured to be on in a normal state, and if a short-circuit fault occurs in a third load among the one or more first loads, the switch is configured to be switched from on to off.

3. The power supply circuit according to claim 2, wherein the first power supply circuit is configured to: if the short-circuit fault occurs in the third load among the one or more first loads, blow a fuse connected to the third load under the action of the BMS and the controller of the DC/DC converter.

4. The power supply circuit according to claim 1, wherein the switch is configured to be on in a normal state; if a fault occurs in the first power supply circuit or the second power supply circuit, the switch is configured to be switched from on to off; and if the fault is cleared, the switch is configured to be switched from off to on.

5. The power supply circuit according to claim 4, wherein it is determined, by detecting currents or voltages of the first power supply circuit and the second power supply circuit, whether the fault occurs in the first power supply circuit or the second power supply circuit or whether the fault in the first power supply circuit or the second power supply circuit is cleared.

6. The power supply circuit according to any one of claims 1 to 5, wherein both the one or more first loads and the one or more second loads comprise a fourth load.

7. A control method for a power supply circuit, wherein the power supply circuit comprises a first power supply circuit and a second power supply circuit, the first power supply circuit comprises a first battery and a direct current/direct current DC/DC converter, an input end of the DC/DC converter is connected to the first battery, and an output end of the DC/DC converter is configured to supply power to a battery management system of the first battery, a controller of the DC/DC converter, and one or more first loads; the second power supply circuit comprises a second battery, the second battery is connected to the output end of the DC/DC converter through a switch, the second battery is configured to supply power to the controller of the DC/DC converter and one or more second loads, and the control method comprises:
detecting fault statuses of the first power supply circuit and the second power supply circuit; and
controlling, based on a detection result, the switch to be turned on or turned off.

8. The control method according to claim 7, wherein the controlling, based on a detection result, the switch to be turned on or turned off comprises:
if it is detected that a short-circuit fault occurs in a third load among the one or more first loads, controlling the switch to be turned off, wherein a fuse connected to the third load is blown under the action of the BMS and the controller of the DC/DC converter.

9. The control method according to claim 7, wherein the controlling, based on a detection result, the switch to be turned on or turned off comprises:
if a fault occurs in the first power supply circuit or the second power supply circuit, controlling the switch to be turned off; or
if faults in the first power supply circuit and the second power supply circuit are cleared, controlling the switch to be turned on.

10. A control apparatus for a power supply circuit, comprising a module configured to perform the control method according to any one of claims 7 to 9.

11. A computer-readable storage medium, wherein the computer-readable storage medium stores computer instructions, and when the computer instructions are run on a computer, the control method according to any one of claims 7 to 9 is implemented.

12. An electronic device, comprising the power supply circuit according to any one of claims 1 to 6.

13. A vehicle, comprising the power supply circuit according to any one of claims 1 to 6.

14. The control method according to claim 13, wherein one or more first loads and one or more second loads each comprise an intelligent driving controller.
